# EUROPEAN PATENT APPLICATION

(11) **EP 2 476 577 A2**
(43) Date of publication of application: **18.07.2012**
(21) Application number: 12151235.4
(22) Date of filing: 16.01.2012
(51) Int. Cl.: B60L 11/18

(54) **Charging apparatus and operating tool**

(30) Priority: 17.01.2011 JP 2011007005
(71) Applicant: Kabushiki Kaisha Yaskawa Denki, Kitakyushu-shi, Fukuoka 806-0004 (JP)
(72) Inventor: Okabayashi, Kazuo, Fukuoka, 806-0004 (JP); Fukuda, Yasuji, Fukuoka, 806-0004 (JP); Nagamitsu, Kengo, Fukuoka, 806-0004 (JP)
(74) Representative: Viering, Jentschura & Partner

(57) **Abstract**

A charging apparatus holding an added value besides a charging function is provided. The charging apparatus 10 for charging electric power supplied from a power source to a charging target includes an operating tool 50 configured to operate charging to the charging target. The operating tool 50 includes: a region A indicating a step of connecting a connector, which is to be connected to the charging target, to the charging target; a region B indicating a step of operating a start switch to start charging to the charging target; a region C indicating a charged state of the charging target; and a region D indicating a step of removing the connector from the charging target. These regions are arranged along a first direction.

## Description

### TECHNICAL FIELD

The present invention relates to charging apparatuses and operating tools.

### BACKGROUND ART

Patent Document 1 (Design Publication) discloses an automated dedicated charging station including a card system. When a user inserts a card into a magnetic card insertion port, information on a drive state is displayed on an operation guide plate. The user pushes a drive or stop button according to a displayed operation step. When the drive button is pushed, charging starts. By contrast, when the stop button is pushed, the charging stops (driving of the charging station terminates), and a receipt indicating a driving result is output from a receipt slot.

### Prior Art Document

Patent Document 1: Japanese Design Registration No. 919451

### SUMMARY OF THE INVENTION

The present invention has its object of providing a charging apparatus and an operating tool in which possibility of misopoeration is reduced.

### Means for Solving the Problems

A charging apparatus according to the present invention is a charging apparatus for charging electric power supplied from a power source to a charging target, including an operating tool configured to operate charging to the charging target, wherein the operating tool includes: a region A indicating a step of connecting a connector, which is to be connected to the charging target, to the charging target; a region B indicating a step of operating a start switch to start charging to the charging target; a region C indicating a charged state of the charging target; and a region D indicating a step of removing the connector from the charging target, and the region A, the region B, the region C, and the region D are arranged along a first direction.

In the charging apparatus according to the present invention, the start switch can be arranged in the region B.

In the charging apparatus according to the present invention, an indicator configured to display the charged state can be arranged in the region C.

In the charging apparatus according to the present invention, the operating tool can further include a region E indicating a step of stopping charging operation, and a stop switch to stop the charging operation can be arranged in the region E.

In the charging apparatus according to the present invention, the region C and the region E can be arranged along a second direction different from the first direction.

In the charging apparatus according to the present invention, the first direction can be a direction going from left to right as viewed by an operator operating the operating tool.

In the charging apparatus according to the present invention, the first direction can be a direction going down from above as viewed by the operator.

In the charging apparatus according to the present invention, the second direction can be a direction going down from above as viewed by the operator.

In the charging apparatus according to the present invention, the indicator can display information on the charged state in a first display region and can display precaution to the operator in a second display region different from the first display region.

In the charging apparatus according to the present invention, a background color of one of the first and second display regions can be white, while a background color of the other display region is black.

In the charging apparatus according to the present invention, a background color of the first display region and a background color of the second display region can be in a complementary color relationship.

In the charging apparatus according to the present invention, the first display region can be arranged on the upper side or the left side of the second display region.

In the charging apparatus according to the present invention, an emergency stop button for emergency stop of charging operation is arranged on the upper right side of the region D.

An operating tool according to the present invention includes a plurality of first regions displaying operation of an apparatus step by step and provided along a first direction, wherein a step of operating the operation button is displayed in one of the plurality of first regions, and an operation button is arranged in the one of the plurality of first regions.

In the operating tool according to the present invention, a second region displaying a step of stopping the operation can be provided along a direction different from the first direction, and a stop button for stopping the operation can be arranged in the second region.

An apparatus according to the present invention includes the above operating tool of the present invention.

With the charging apparatus and the operating tool according to the present invention, possibility of misoperation can be reduced when compared with ones including no feature of the present invention.

### BRIEF DESCRIPTION OF THE DRAWINGS

FIG 1 is an explanatory illustration showing a use state of a charging apparatus according to one embodiment of the present invention.
FIG.2 is a perspective view of a station section included in the charging apparatus.
FIG. 3 is a front view of the station section included in the charging apparatus.
FIG. 4 is a right side view of the station section included in the charging apparatus.
FIG 5 is a left side view of the station section included in the charging apparatus.
FIG. 6 is a rear view of the station section included in the charging apparatus.
FIG. 7 is a plan view of the station section included in the charging apparatus.
FIG. 8 is a bottom view of the station section included in the charging apparatus.
FIG. 9 is an explanatory illustration showing a first utilization manner of free space of the station section included in the charging apparatus.
FIG. 10 is an explanatory illustration showing a second utilization manner of the free space of the station section included in the charging apparatus.
FIG 11 is an explanatory illustration showing a third utilization manner of the free space of the station section included in the charging apparatus.
FIG 12 is an explanatory illustration showing a fourth utilization manner of the free space of the station section included in the charging apparatus.
FIG. 13 is an explanatory illustration showing a fifth utilization manner of the free space of the station section included in the charging apparatus.
FIG. 14 is a front view of an operating tool provided in the charging apparatus.
FIG. 15 is an explanatory illustration of a display screen of the operating tool provided in the charging apparatus.
FIG. 16 is an explanatory illustration of a display screen of the operating tool provided in the charging apparatus.

### DESCROPTION OF PREFERRED EMBODIMENTS

Embodiments in which the present invention is put into practical use will be discussed next with reference to the accompanying drawings. It is noted that parts irrelevant to the description may not be shown in the respective drawings in some cases.

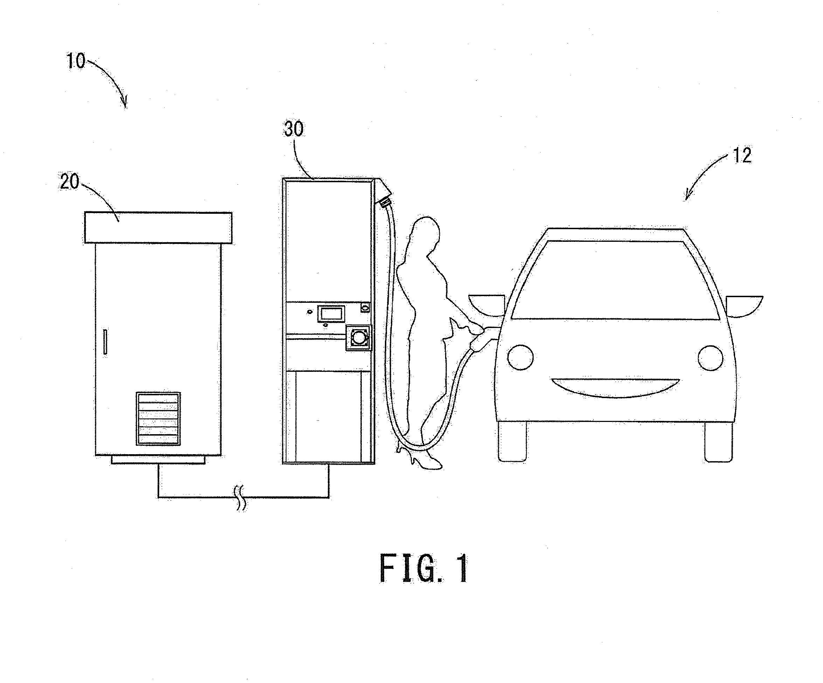

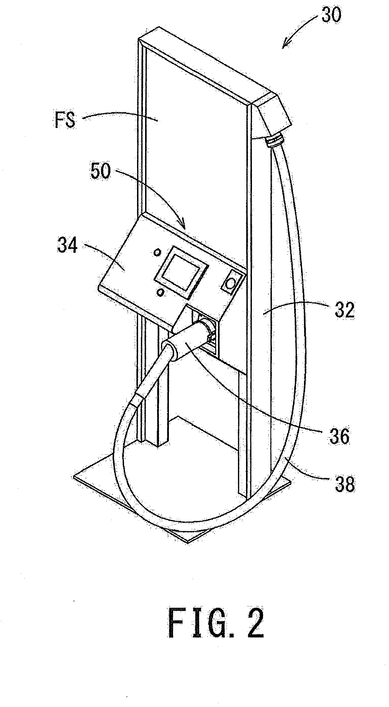

As shown in FIGS. 1 and 2, a charging apparatus (one example of an apparatus) 10 provided with an operating tool 50 according to one embodiment of the present invention is capable of charging a battery boarded on an electric vehicle (one example of a charging target) 12, for example. The charging apparatus 10 can be installed not only at an existing filling station but also at a store, such as a convenience store, etc. and a parking lot. The installation site of the charging apparatus 10 may be indoor or outdoor.

The charging apparatus 10 includes a power source section 20 and a station section 30.

The power source section 20 is installed in a site apart from the station section 30. The power source section 20 is capable of converting commercial power source to electric power and supplying electric power necessary for charging a charging target to the station section 30.

The station section 30 can supply the electric power supplied from the power source section 20 directly to the electric vehicle 12 or the like.

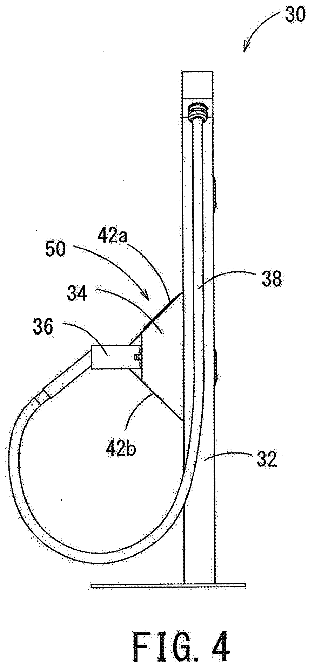

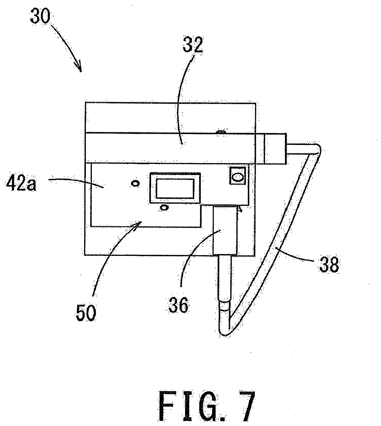

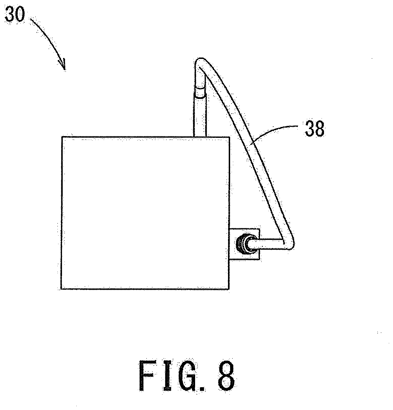

As shown in FIGS. 2-8, the station section 30 includes a base 32, a protrusion 34, and a charging cable 38. The charging cable 38 extends downward from the upper part of the base 32. Further, a charging connector (one example of a connector) 36 to be connected to the charging target is attached to the distal end of the charging cable 38.

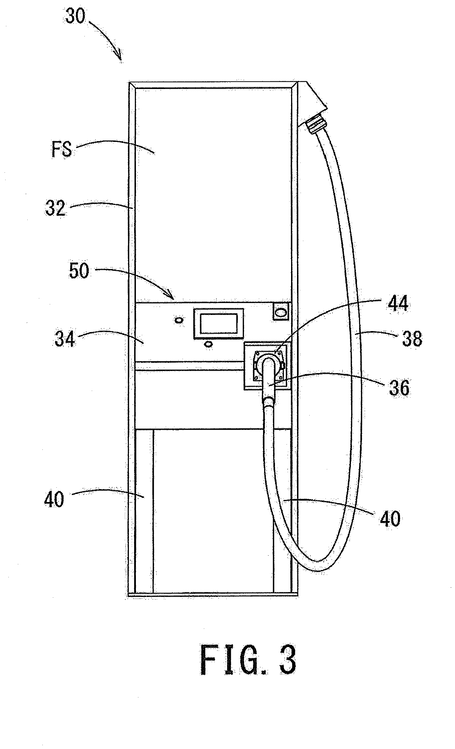

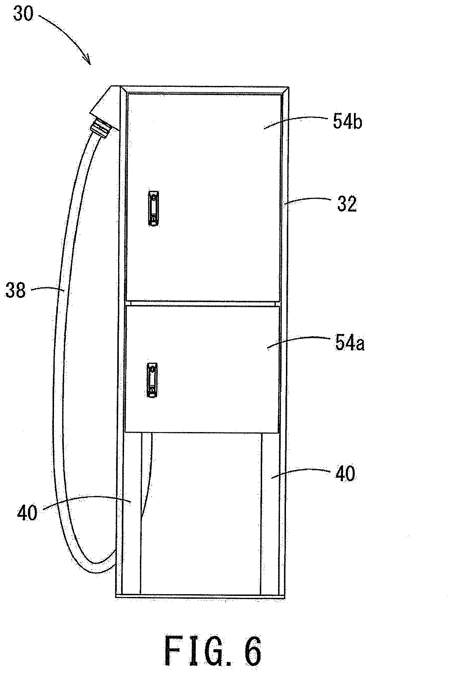

The base 32 extends in a vertical direction (upward from the installation plane). Two pillars 40, for example, are provided at the lower part of the base 32 (see FIGS. 3 and 6).

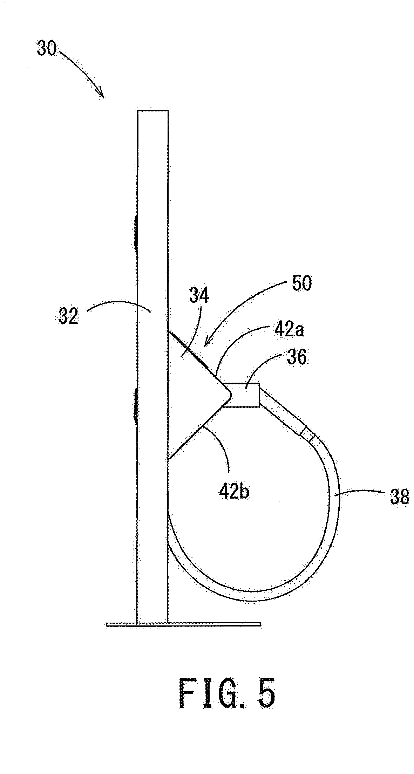

The protrusion 34 is fixed to the base 32 at a predetermined height. The protrusion 34 is fixed to a part of the base 32. The protrusion 34 is composed of at least an upper plate 42a extending obliquely frontward and downward from the base 32 and a lower plate 42b extending obliquely frontward and upward from the base 32. The protrusion 34 protrudes frontward than the base 32. That is, as shown in FIG. 5, the protrusion 34 is in triangular shape when viewed from the left side of the charging apparatus 10, and its vertical width (distance between the upper plate 42a and the lower plate 42b) decreases as it goes frontward from the base 32. The tip end part where the upper plate 42a is in contact with the lower plate 42b is rounded. The rounded tip end part is safe even if an operator comes in contact therewith.

Further, the protrusion 34 is notched in the right end part thereof to form a notched portion. As shown in FIG 3, a catcher 44 for catching the charging connector 36 is provided in the notched portion.

Moreover, the protrusion 34 includes the operating tool 50 for operating to charge to the charging target. For example, the operating tool 50 is provided on the upper plate 42a of the protrusion 34. Operation buttons (a start button 52a and a stop button 52b) for operation (charging operation) of the charging apparatus 10 are arranged on the operating tool 50 (see FIGS. 3-5 and 14). Each operation button arranged on the operating tool 50 is arranged within a height range of 1000 ± 200 mm from the ground plane of an operator using the charging apparatus 10. It is noted that this height range may be preferably set to 1000 ± 150 mm, and more preferably 1000 ± 100 mm. With the operation buttons of the operating tool 50 arranged within this range, the charging apparatus 10 according to the present invention can provide favorable operability to an operator even in a wheelchair operating the charging apparatus 10.

Further, since the charging connector 36 is caught in the right end part of the protrusion 34 set at the operation-easy height, it is easy for the operator to operate the charging apparatus 10.

The protrusion 34 is provided on the front surface (the surface facing the operator when the operator operates the charging apparatus 10) of the station section 30, while a first rear door 54a is provided at a portion of the back surface (the surface opposite to the front surface of the station section 30) of the station section 30 which corresponds to the protrusion 34, as shown in FIG. 6. When the first rear door 54a is opened, a controller (not shown) for controlling the operating tool 50 arranged inside the protrusion 34 can be maintained.

As described with reference to FIGS. 2-5, provision of the protrusion 34 protruding frontward than the base 32 in the operating tool 50 can enhance the operability of the charging apparatus 10.

The charging cable 38 is arranged to extend downward from the upper right part of the base 32. The length of the charging cable 38 is set so as not to come into contact with the ground when the charging connector 36 at the distal end of the charging cable 38 is caught in the catcher 44.

Here, space for disposing an article (hereinafter referred to as "free space") FS is formed on the upper side of the part where the protrusion 34 is fixed.

Any article appealing to a user of the charging apparatus 10 can be disposed in the free space FS.

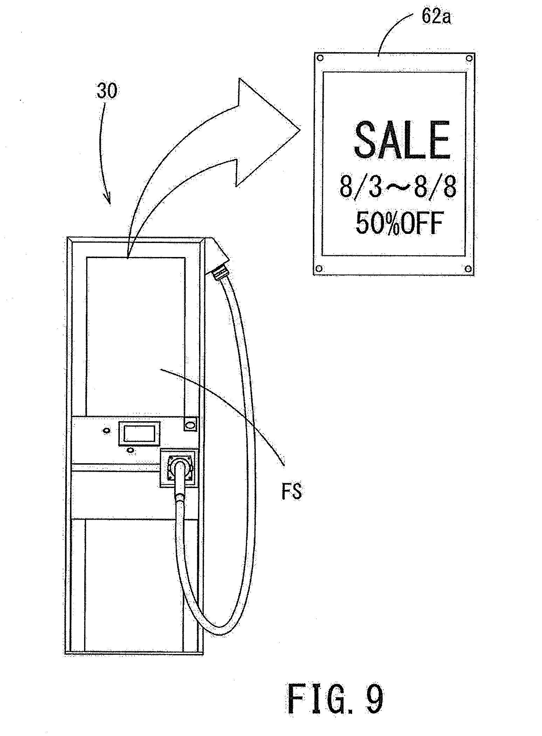

Referring to a first example, the article is a bulletin board 62a (see FIG. 9). The front surface of the bulletin board 62a is covered with a glass plate. Posting up an advertisement of a store on the bulletin board 62a enables an installation personnel (e.g., an owner of a filling station, a store, or a parking lot) to promote sales to the users.

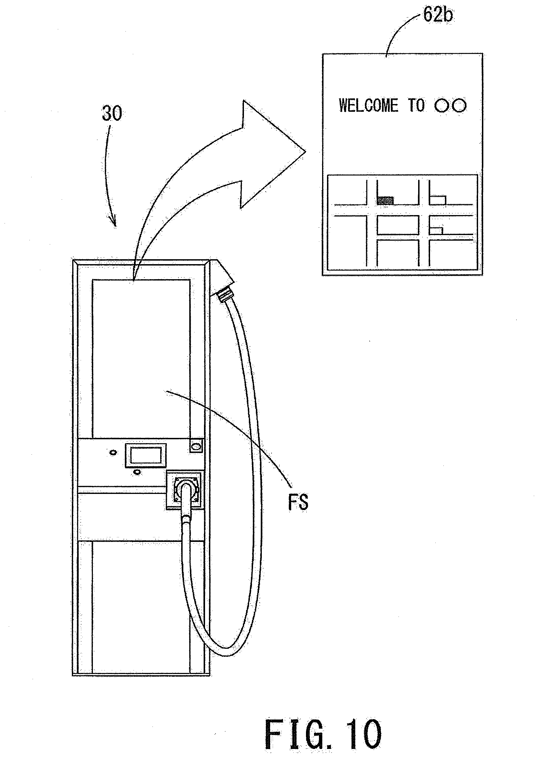

Referring to a second example, the article is a monitor 62b that displays information (see FIG. 10). Displaying an advertisement, a shop information map, a sightseeing map in the neighborhood, etc. on the monitor 62b enables the installation personnel to offer user's convenience.

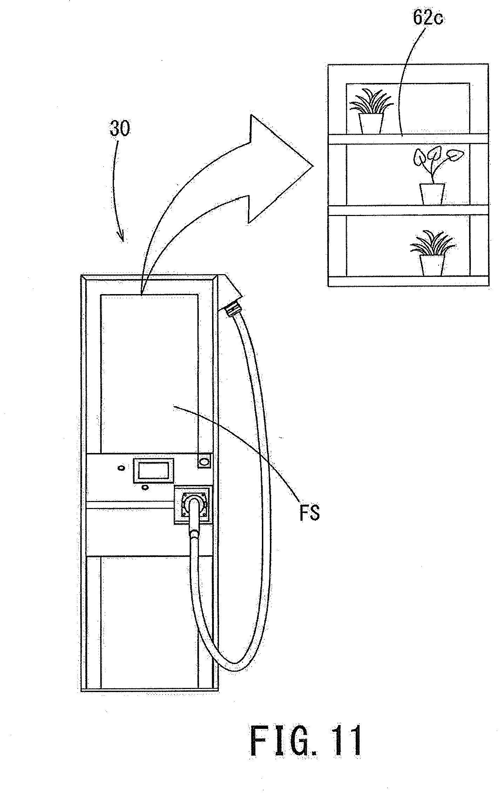

Referring to a third example, the article is a shelf 62c (see FIG. 11). Arranging the shelf 62c in the free space FS and decorating the shelf 62c with foliage plants enable the installation personnel to enhance the shop image.

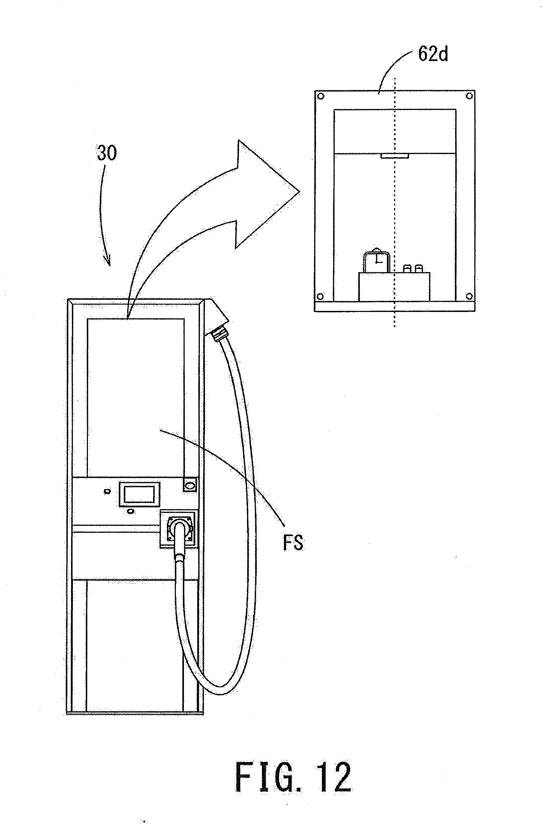

Referring to a fourth example, the article is a showcase 62d that displays goods (see FIG. 12). The owner of a store or the like as the installation personnel of the charging apparatus 10 can publicize the goods and services to the users.

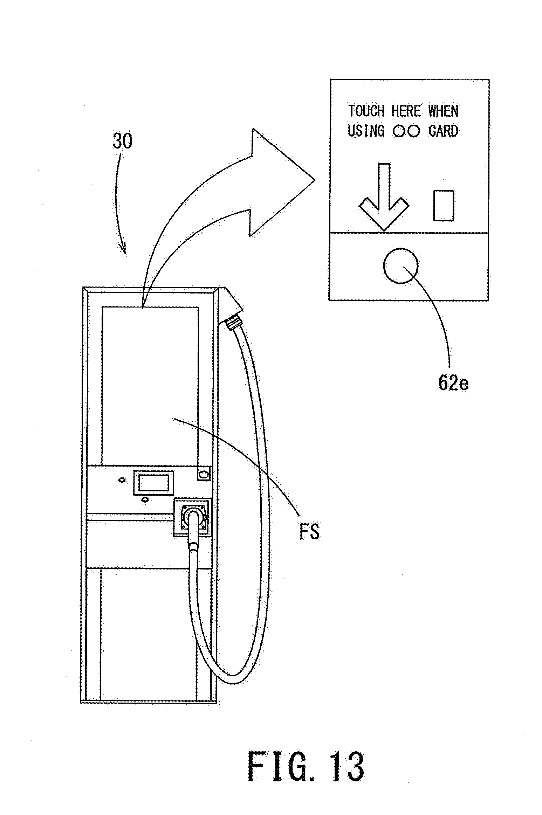

Referring to a fifth example, the article is a reader 62e (see FIG. 13). The reader 62e reads the information of a noncontact IC card (one example of cards). Providing the reader 62e in the free space FS enables the installation personnel to enhance the user's convenience.

Referring further to a sixth example, the article can be a mirror.

It is noted that in the present invention, the position where the free space FS is formed is not limited to the upper side of the part where the protrusion 34 is fixed. As far as the free space FS serves as space used for disposing the article, the position where the free space FS is formed can be located on the lower side of the part where the protrusion 34 is fixed. Further, the position where the free space FS is formed may be located on both the upper side and the lower side of the part where the protrusion 34 is fixed.

For example, the mirror can be disposed on the upper side of the part where the protrusion 34 is fixed, while the shelf 62c can be disposed on the lower side of the part where the protrusion 34 is fixed. Further, two or more articles (e.g., the mirror and the shelf) can be disposed on at least one of the upper side and the lower side of the part where the protrusion 34 is fixed.

As described above, since the free space FS used for disposing the article is formed in the station section 30, the charging apparatus 10 according to the present embodiment enables the installation personnel to hold an added value besides provision of the charging function to the user.

It is noted that, as shown in FIG 6, the protrusion 34 is provided on the front surface (the surface facing the operator when the operator operates the charging apparatus 10) of the station section 30, while a second rear door 54b is provided at a part of the back surface (the surface opposite to the front surface of the station section 30) of the station section 30 which corresponds to the protrusion 34.

The charging apparatus 10 according to the present embodiment has been described with reference to FIGS. 1-13. It is noted that the present invention is not limited to the charging apparatus 10 including the power source section 20. As far as the charging apparatus 10 includes the station section 30, the power source section 20 may be an outside power source for the charging apparatus 10.

The operating tool 50 provided on the upper plate 42a of the protrusion 34 will be described next in detail with reference to FIGS. 1, 4, and 14-16.

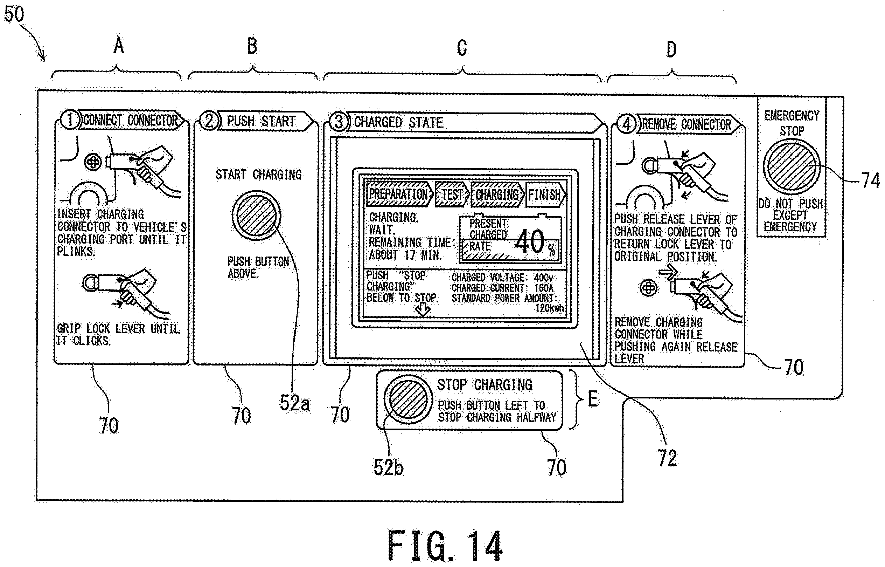

The operating tool 50 is for operating to charge operation to the charging target. A plurality of first regions that display the operation of the apparatus step by step are provided along a first direction in the operating tool 50. One of the first regions indicates steps of operating operation buttons. The operation buttons are arranged in anther region. Specifically, as shown in FIG. 14, regions A-D (the plurality of first regions) indicating respective operation steps of the charging apparatus 10 are arranged in line along the direction (the first direction) from left to right in the operating tool 50. Each region A-D is surrounded by a frame 70. Numbers corresponding to the respective operation steps are noted at the upper end parts of the respective regions A-D. Further, the summary of each operation step is noted on the right side of the corresponding number.

In the region A, steps of connecting a connector, which is to be connected to a charging target, to the charging target are indicated. Referring to a specific example, steps of connecting the charging connector 36 to a charging target, for example, the electric vehicle 12 or the like (information on inserting the charging connector 36 to the electric vehicle 12 and information on handling a lever of the charging connector 36) are indicated in group together with illustrations in the region A.

In the region B, a start switch (operation button) to start charging to a charging target is arranged, and a step of operating the start switch (step of operating the operation button) is indicated. Referring to a specific example, in the region B, the start button 52a (hardware switch) to start charging to the charging target is arranged, and a step of operating the start button 52a is indicated.

The charged state of a charging target is indicated in the region C. As a specific example, an indicator 72 is arranged in the region C. The indicator 72 indicates the charged state of the charged target.

Steps of removing the charging connector 36 from the charging target (information on handling the lever of the charging connector 36 and information on removing the charging connector 36 from the charging target) are indicated in group together with illustrations in the region D. It is noted that an emergency stop button 74 for emergency stop of the charging operation is arranged on the upper right side of the region D.

As described in detail with reference to FIGS. 14-16, the operation steps are displayed in the regions A-D, and the regions A-D are arranged in line along the first direction (e.g., direction from left to right). Thus, the operator can easily understand the flow of the operation steps.

Here, if the buttons and the indication of the steps of operating the buttons (explanation of the operation) are separately arranged, the operator must understand the correspondence between the buttons and the explanation of the operation. However, in the operating tool 50 described in the present embodiment, the buttons and the indication of the steps of operating the buttons are arranged correspondingly, as in the region B. Thus, the operator is not required to understand the correspondence, thereby enabling intuitively operation.

In the operating tool 50, a second region displaying a step of stopping the operation is further arranged along a direction different from the first direction. A stop button to stop the operation is arranged in the second region. For example, a region E (second region) is arranged below the region C. In the region E, a step of stopping the charging operation is indicated, and a stop switch to stop the charging operation is further arranged. Referring to a specific example, in the region E, the stop button 52b (hardware switch) to stop the charging operation is arranged, and the step of operating the stop button 52b is indicated.

The start button 52a is a button to be usually operated in accordance with the operation steps. By contrast, the stop operation is unusual operation, and the stop button 52b is used only when necessary for the operator. Accordingly, the stop button 52b is arranged so as not to be located adjacent to the start button 52a.

As described in detail with reference to FIG. 14, the region C and the region E are arranged along the second direction different from the first direction. The region E, which includes the stop button 52b that is not usually used, is arranged along the direction (one example of the second direction and a direction going down from above in the present embodiment) different from the direction in which the regions A-D, which indicate the usual operation steps, are arranged. Thus, an operator unaccustomed to the operation can understand the region E as a region indicating the unusual operation, thereby reducing misoperation.

It is noted that depending on an apparatus as an operation target, the regions A-D may be arranged in line along the direction going down from above, while the region E is arranged on the right side of the region C. That is, the first direction may be set to go down from above, while the second direction is set to go right from left.

Displayed information of the indicator 72 arranged in the region C will be described next.

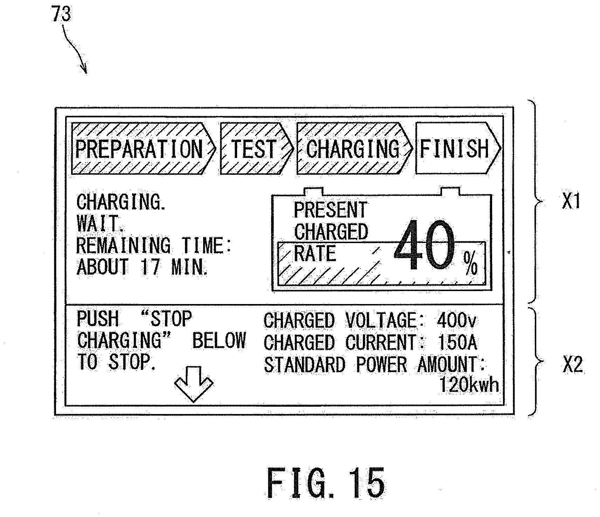

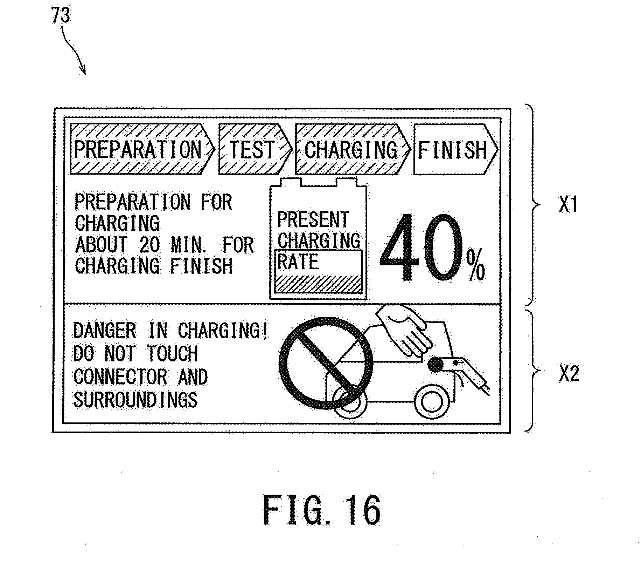

The indicator 72 is a monochrome liquid crystal panel, for example. As shown in FIGS. 15 and 16, a display screen 73 of the indicator 72 includes at least a first display region X1 and a second display region X2 arranged below the first display region X1.

The first display region X1 displays information on the charged state of the charging target. The information on the charged state is status indicting, as shown in FIG. 15 for example: 1) character information, such as "Charging. Wait. Remaining Time: About 17 Minutes"; 2) an illustration indicating a charging rate of the buttery displayed on the right side of the character information; and 3) the progress of the charging operation indicated in the upper part of the first display region X1 ("Preparation", "Testing", "Charging", and "Finish"). Further, according to the status of the charging apparatus 10, the first display region X1 displays character information, such as "Preparation for Charging. About 20 Minutes for Charging Finish", as shown in FIG. 16 for example, as information on the charged state together with an illustration (graph). As shown in FIGS. 15 and 16, the background color of the first display region X1 is white, for example.

The second display region X2 displays precaution to at least the operator. The precaution is information, such as "Push "Stop Charging" Below to Stop" as shown FIG 15. Further, according to the status of the charging apparatus 10, precaution "Danger in Charging. Do Not Touch Connector and Surroundings" is displayed together with an illustration, as shown in FIG. 16 for example. The background color of the second display region X2 is black, for example.

As described with reference to FIGS. 15 and 16, the display screen 73 of the indicator 72 is divided horizontally into the first display region X1 and the second display region X2. The first display region X1 displays the state relating to the charged state, while the second display region X2 displays the precaution to the operator. The background color of the first display region X1 is set to be white, while the background color of the second display region X2 is set to be black. Thus, the operator can easily understand the displayed information of the display screen 73, thereby obtaining an indicator excellent in legibility of the display screen 73.

It is noted that the background color of the first display region X1 and the background color of the second display region X2 may be opposite to each other. That is, the background color of the first display region X1 may be set to be black, while the background color of the second display region X2 is set to be white. Alternatively, a color indicator may be employed instead of the monochrome indicator. In this case, when the background color of the first display region X1 and the background color of the second display region X2 are set in a complementary color relationship, the legibility of the display screen 73 can be enhanced.

In addition, other than the vertical arrangement of the first display region X1 and the second display region X2, the first display region X1 and the second display region X2 can be arranged horizontally. Specifically, the first display region X1 may be arranged on the left side of the second display region X2.

It is noted that the present invention is not limited to the above described embodiments, and can be changed within the scope that does not change the subject matter of the present invention. For example, the technical scope of the present invention encompasses an invention according to a combination of part or all of the above described embodiments and modified examples.

The operating tool 50 in the above described embodiment includes the indicator 72 and the plurality of buttons (hardware switches). However, as far as the operating tool 50 has an operation function for charging operation to the charging target, the operating tool 50 is not limited to one including the indicator 72 and the hardware switches. For example, the indicator 72 can be a touch panel, and at least some of the plurality of hardware switches may be buttons (hardware switches) displayed on the indicator 72.

In addition, the notched portion may be formed in the left end part of the protrusion 34.

The charging cable 38 can be arranged so as to extend downward from the upper left part of the base 32.

### EXPLANATION OF REFERENCE CHARACTERS

- 10: charging apparatus
- 12: electric vehicle
- 20: power source section
- 30: station section
- 32: base
- 34: protrusion
- 36: charging connector
- 38: charging cable
- 40: pillar
- 42a: upper plate
- 42b: lower plate
- 44: catcher
- 50: operating tool
- 52a: start button
- 52b: stop button
- 54a: first rear door
- 54b: second rear door
- 62a: bulletin board
- 62b: monitor
- 62c: shelf
- 62d: showcase
- 62e: reader
- 70: frame
- 72: indicator
- 73: display screen
- 74: emergency stop button

## Claims

1. A charging apparatus for charging electric power supplied from a power source to a charging target, comprising:
an operating tool configured to operate charging to the charging target,
wherein the operating tool includes:
a region A indicating a step of connecting a connector, which is to be connected to the charging target, to the charging target;
a region B indicating a step of operating a start switch to start charging to the charging target;
a region C indicating a charged state of the charging target; and
a region D indicating a step of removing the connector from the charging target, and
the region A, the region B, the region C, and the region D are arranged along a first direction.

2. The charging apparatus of claim 1, wherein
the start switch is arranged in the region B.

3. The charging apparatus of claim 1 or 2, wherein
an indicator configured to display the charged state is arranged in the region C.

4. The charging apparatus of any one of claims 1-3, wherein
the operating tool further includes a region E indicating a step of stopping charging operation, and
a stop switch to stop the charging operation is arranged in the region E.

5. The charging apparatus of claim 4, wherein
the region C and the region E are arranged along a second direction different from the first direction.

6. The charging apparatus of any one of claims 1-5, wherein
the first direction is a direction going from left to right as viewed by an operator operating the operating tool.

7. The charging apparatus of any one of claims 1-5, wherein
the first direction is a direction going down from above as viewed by the operator.

8. The charging apparatus of claim 6, wherein
the second direction is a direction going down from above as viewed by the operator.

9. The charging apparatus of claim 3, wherein
the indicator displays information on the charged state in a first display region and displays precaution to the operator in a second display region different from the first display region.

10. The charging apparatus of claim 9, wherein
a background color of one of the first and second display regions is white, while a background color of the other display region is black.

11. The charging apparatus of claim 9, wherein
a background color of the first display region and a background color of the second display region are in a complementary color relationship.

12. The charging apparatus of any one of claims 9-11, wherein
the first display region is arranged on the upper side or the left side of the second display region.

13. The charging apparatus of claim 12, wherein
an emergency stop button for emergency stop of charging operation is arranged on the upper right side of the region D.

14. An operating tool, comprising:
a plurality of first regions displaying operation of an apparatus step by step and provided along a first direction,
wherein a step of operating the operation button is displayed in one of the plurality of first regions, and an operation button is arranged in the one of the plurality of first regions.

15. The operating tool of claim 14, wherein
a second region displaying a step of stopping the operation is provided along a direction different from the first direction, and
a stop button for stopping the operation is arranged in the second region.

16. An apparatus comprising the operating tool of claim 14 or 15.
